# EUROPEAN PATENT SPECIFICATION

(11) **EP 1 667 319 B1**
(45) Date of publication and mention of the grant of the patent: **19.06.2013**
(21) Application number: 05005805.6
(22) Date of filing: 17.03.2005
(51) Int. Cl.: H02P 27/18

(54) **Apparatus for controlling speed of fan motor of air-conditioner**
Gerät zur Geschwindigkeitsregelung einer Lüftermotoreinheit von einer Klimaanlage
Appareil pour contrôler la vitesse d'un ventilateur à moteur de climatisation

(30) Priority: 23.11.2004 KR 2004096468
(43) Date of publication of application: 07.06.2006
(73) Proprietor: LG Electronics, Inc., Seoul (KR)
(72) Inventor: Han, Seung-Do, Namdong-Gu Incheon (KR); Shin, Hyoun-Jeong, Mandong-Gu Incheon (KR)
(74) Representative: Cohausz & Florack

(56) References cited:
- EP-A- 0 250 008
- DE-A1- 2 206 224
- DE-A1- 19 536 148
- US-A- 3 908 158
- US-A- 4 763 240
- US-A- 5 650 697
- US-A1- 2001 011 879
- US-A1- 2003 146 722
- US-B1- 6 208 113
- US-B1- 6 713 986

## Description

### BACKGROUND OF THE INVENTION

### 1. Field of the Invention

The present invention relates to an air-conditioner and, more particularly, to an apparatus for controlling a speed of a fan motor of an air-conditioner.

### 2. Description of the Conventional Art

In general, a single-phase induction motor is used as a fan motor of an air-conditioner. In order to generate rotating torque, the single-phase induction motor supplies a magnetizing current generating a rotating field and an induced current generated from a rotor to windings connected with an external power terminal.

The single-phase induction motor has a limitation in enhancing efficiency due to a primary copper loss of a stator and a secondary copper loss of the rotor.

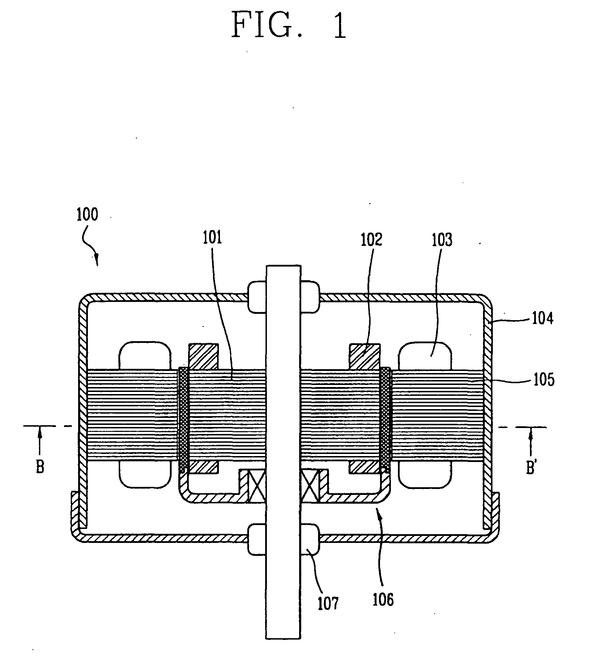

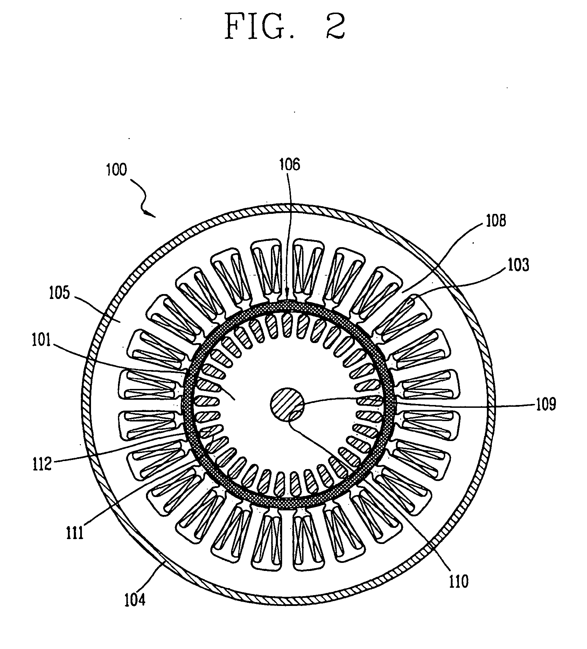

In order to resolve such limitation, recently, a HIM (Hybrid Induction Motor) as shown in Figures 1 and 2 is used as a fan motor of the air-conditioner.

Figure 1 is a schematic sectional view of the HIM in accordance with a conventional art, and Figure 2 is a schematic sectional top view taken along line B-B' of the HIM of Figure 1.

As shown in Figures 1 and 2, a bracket 104 of the conventional HIM 100 includes a stator 105 and an induction rotor 101 installed at an inner side of the stator 105. A plurality of slots 108 are protrusively formed at an inner side of the stator 105 and coils 103 for applying a current are wound at the slots 108.

Aluminum rotor bars 112 are vertically inserted into a plurality of air gaps formed in an up/down direction at an edge of the rotor 101, and the aluminum rotor bars 112 are connected by an end ring 102.

A rotating shaft 109 for transferring a rotational force of the rotor 101 to outside is installed in an air gap 110 formed at the center of the induction rotor 101. The rotating shaft 109 can be rotated by an oilless bearing 107 installed at the bracket 104.

A permanent magnet rotor 106 for rotating the rotor 101 with a strong magnetic flux while being rotated by rotating field generated from the stator 105 is installed between the stator 105 and the induction rotor 101.

When an AC voltage is applied to the conventional HIM, the permanent magnet rotor 106 is rotated by the current applied to the coil 103 of the stator 105, and the rotating permanent magnet rotor 106 generates a rotating field with strong magnetic flux, to rotate the induction rotator 101. At this time, the permanent magnet rotor 106 in a low inertia state is separated from a fan (not shown) and rotated owing to the rotating field of the stator 105, and as a torque generating magnetic flux is supplied to the induction rotor 101 owing to the rotating field of the permanent magnet rotor 10, the induction rotor 101 is rotated.

In other words, when the permanent magnet rotor 106 is rotated by the rotating field in an oval form generated from the stator of the distributed windings, the permanent magnet rotor 106 generates rotating field with strong magnetic flux to make the induction rotor 101 rotated, so that the HIM is operated with high efficiency and low noise.

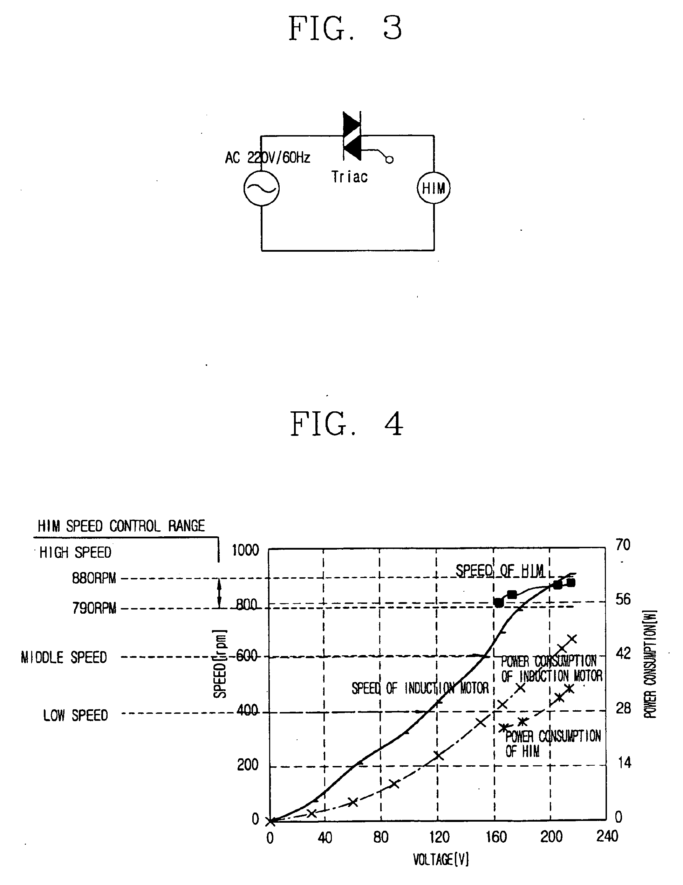

Velocity characteristics of the conventional apparatus for controlling a speed of the fan motor of the air-conditioner and a general induction motor will now be described with reference to Figures 3 and 4.

Figure 3 is a circuit diagram showing the construction of the apparatus for controlling a speed of the fan motor (HIM) in accordance with the conventional art, and Figure 4 is a graph showing speed characteristics of the conventional HIM and a general induction motor.

As shown in Figure 3, when the apparatus for controlling a rotational speed of the fan motor by controlling a phase of a voltage applied to the fan motor (HIM) through one triac is applied for the HIM, a speed control range (i.e., 790~880RPM (revolution per minute, RPM) according to the voltage is limited as shown in Figure 4. Namely, the speed control range is limited to the 790~990RPM due to the permanent magnet rotor 106. This causes a problem that the conventional apparatus for controlling the speed of the fan motor cannot be applied for air-conditioner which requires a speed control range or above 100RPM.

U.S. Patent No. 6,819,026 issued on November 16, 2004 also discloses an induction motor used as a fan motor of an air-conditioner.

### SUMMARY OF THE INVENTION

Therefore, one object of the present invention is to provide an apparatus for controlling a speed of a fan motor of an air-conditioner capable of expanding a speed control range of a fan motor of an air-conditioner by simultaneously varying a phase and a frequency of an AC voltage according to a frequency command of a user.

These objects are solved by the features of the apparatus claim 1. The dependent claims recite advantageous embodiments of the invention.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a schematic sectional view of the HIM in accordance with a conventional art;
Figure 2 is a schematic sectional top view taken along line B-B' of the HIM of Figure 1;
Figure 3 is a circuit diagram showing the construction of the apparatus for controlling a speed of the fan motor (HIM) in accordance with the conventional art;
Figure 4 is a graph showing speed characteristics of the conventional HIM and a general induction motor;
Figure 5 is a schematic view showing the construction of an apparatus for controlling a speed of a fan motor of an air-conditioner in accordance with a preferred embodiment of the present invention;
Figure 6 is a block diagram showing the construction of a frequency and voltage phase converter of the apparatus for controlling a speed of a fan motor of an air-conditioner in accordance with the preferred embodiment of the present invention;
Figures 7A to 7F show waveforms showing six embodiments of frequency switching patterns in accordance with the present invention; and
Figure 8 is a graph showing power consumption and the number of times of rotation of a HIM when the apparatus for controlling a speed of a fan motor of an air-conditioner is applied for the HIM compared with a conventional art in accordance with the present invention.

### DETAILED DESCRIPTION OF THE PREFERRED EMBODIMENTS

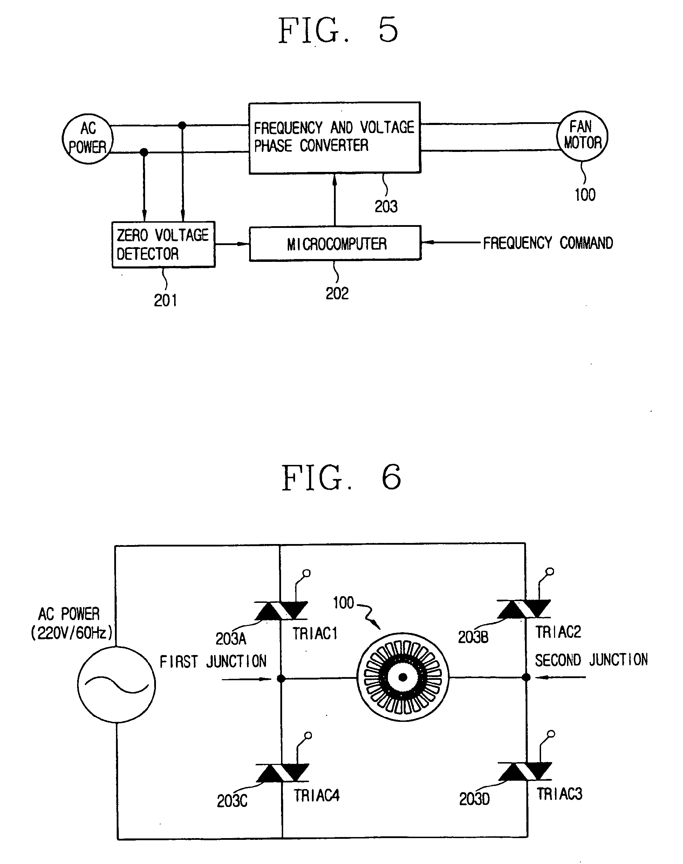

An apparatus for controlling a speed of a fan motor of an air-conditioner capable of expanding a speed control range of a fan motor of an air-conditioner and reducing power consumption of the fan motor by simultaneously varying a phase and a frequency of an AC voltage according to a frequency command of a user, in accordance a preferred embodiment of the present invention will now be described with reference to Figures 5 to 8.

Figure 5 is a schematic view showing the construction of an apparatus for controlling a speed of a fan motor of an air-conditioner in accordance with a preferred embodiment of the present invention.

As shown in Figure 5, the apparatus for controlling a speed of a fan motor of an air-conditioner includes: a frequency and voltage phase converter 203 for simultaneously varying a voltage phase and frequency of a commercial AC power according to a control signal and applying a voltage varied according to the varied frequency and voltage phase to a fan motor (HIM) 100 of the air-conditioner; a zero voltage detector 201 for receiving the commercial AC power and detecting a zero voltage of a voltage wave of the commercial AC power; and a microcomputer 202 electrically connected with the zero voltage detector 201 and the frequency and voltage phase converter 203, generating, the control signal providing a predetermined frequency switching pattern according to a frequency command based on a point when the zero voltage is generated, and outputting the control signal to the frequency and voltage phase converter.

Herein, the fan motor of the air-conditioner is the HIM 100. The microcomputer 202 includes a memory (not shown). The memory previously stores frequency switching patterns for implementing a frequency for controlling a speed of the fan motor 100 according to a frequency command.

When a frequency of an output voltage waveform is lowered, the microcomputer 202 increases a firing angle of the output voltage waveform. For example, if the frequency of the output voltage waveform is increased, the microcomputer 202 reduces the firing angle of the output voltage waveform inverse-proportionally, and when the frequency of the output voltage waveform is reduced, the microcomputer 202 increases the firing angle of the output voltage waveform inverse-proportionally.

Figure 6 is a block diagram showing the construction of a frequency and voltage phase converter of the apparatus for controlling a speed of a fan motor of an air-conditioner in accordance with the preferred embodiment of the present invention.

As shown in Figure 6, the frequency and voltage phase converter 203 includes a first switching device 203A; a second switching device 203C connected in series with the first switching device 203A; a third switching device 203B connected in parallel with the first switching device 203A; and a fourth switching device 203D connected in series with the third switching device 203B and connected in parallel with the second switching device 203C.

The fan motor 100 is electrically connected with a first junction between the first and second switching devices 203A and 203C and with a second junction between the third and fourth switching devices 203B and 203D. Namely, the first and fourth switching devices 203A and 203D are installed in a forward direction with respect to the fan motor 100, and the second and third switching devices 203B and 203C are installed in a reverse direction with respect to the fan motor 100. As the first to fourth switching devices 203A-203D, a triac or an inverter is preferably used, and in the present invention, the first to fourth switching devices 203A~203D are formed as triacs (triac1~triac4), respectively.

The operation of the apparatus for controlling a speed of the fan motor of the air-conditioner in accordance with the present invention will now be described with reference to Figures 5 and 6.

First, when a frequency command for controlling a speed of the fan motor 100 is generated by a user, the microcomputer 202 selects a predetermined frequency switching pattern corresponding to the frequency command from the memory and outputs a control signal for providing the selected frequency switching pattern based on a point at which a zero voltage is generated as detected by the zero voltage detector 10, to the frequency and voltage phase converter 203.

The frequency and voltage phase converter 203 controls the speed of the fan motor 100 by controlling ON/OFF of the four triacs triac1~triac 4 according to the control signal. Herein, the frequency switching pattern can be determined variably according to the frequency command.

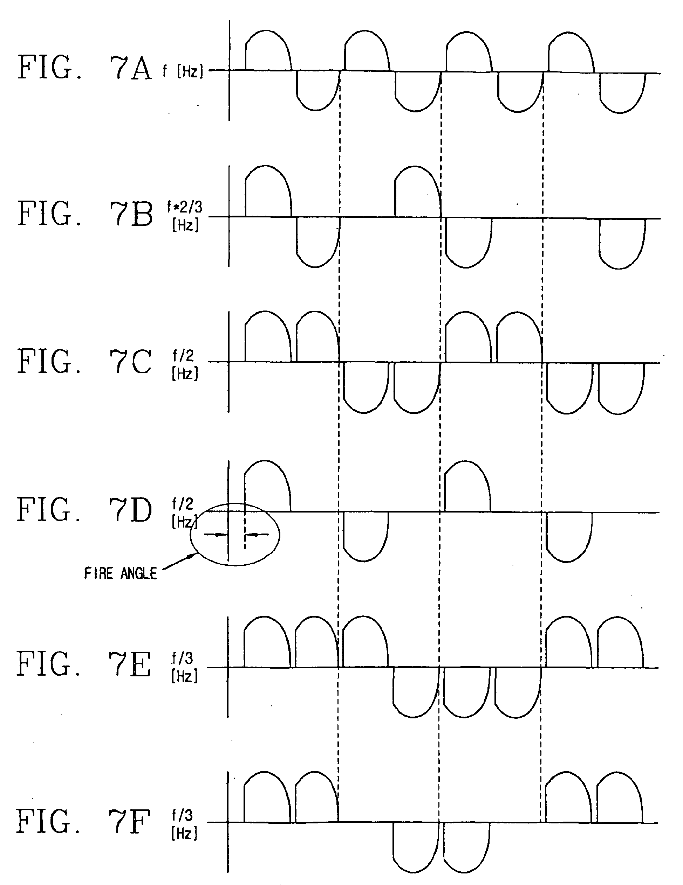

Six types of embodiments of the frequency switching patterns according to the frequency command will be described with reference to Figures 7A to 7F as follows.

Figures 7A to 7F show waveforms showing six embodiments of frequency switching patterns in accordance with the present invention.

As shown in Figure 7A, as for a first frequency switching pattern, when a frequency command for maintaining a frequency (f) of a commercial AC voltage (e.g., 60Hz) by a user is inputted, only the first and fourth switching devices triac1 and triac3 are turned according to a predetermined first firing angle (e.g., 10°) during an entire period of the commercial AC voltage waveform. Namely, when the firing angle of the commercial AC voltage waveform is 10°, the frequency waveform as shown in Figure 7A can be generated by turning on only the first and the fourth switching devices.

Herein, with the commercial AC voltage set as 220V and the frequency (f) of the commercial AC voltage set as 60Hz, when the frequency and voltage phase converter 203 of the speed controlling apparatus is operated according to the first frequency switching pattern, an experimentation reveals that a voltage applied to the HIM 100 was measured as 219V and a speed of the HIM was measured as 855RPM.

As shown in Figure 7B, as for the second frequency switching pattern, when a frequency command for converting the frequency (f) of the commercial AC voltage into a voltage of f*2/3 (e.g., 40Hz) is inputted by the user, a first step of turning on the first and fourth switching devices Triac1 and Triac3 during one period, a second step of turning off the first and the fourth switching devices Triac1 and Triac3 during the next half (1/2) period, and a third step of inverting the voltage by turning on the second and third switching devices Triac2 and Triac4 during the next one period are performed, and then, the first to third steps are repeatedly performed according to a pre-set second firing angle (e.g., 20°) to generate a frequency waveform as shown in Figure 7B. For example, when the firing angle of the commercial AC voltage waveform is 20°, the frequency waveform as shown in Figure 7B can be generated by repeatedly performing the first to third steps.

Herein, with the commercial AC voltage set as 220V and the frequency (f) of the commercial AC voltage set as 60Hz, when the frequency and voltage phase converter 203 of the speed controlling apparatus is operated according to the second frequency switching pattern, an experimentation reveals that a voltage applied to the HIM 100 was measured as 138V and a speed of the HIM was measured as 613RPM.

As shown in Figure 7C, as for the third frequency switching pattern, when a frequency command for converting the frequency (f) of the commercial AC voltage into a voltage of f/2 (e.g., 30Hz) is inputted by the user, a first step of turning on the first and fourth switching devices Triac1 and Triac3 during one period and a second step of inverting the voltage by turning on the second and third switching devices Triac2 and Triac4 during the next one period are performed, and then, the first and second steps are repeatedly performed according to a pre-set third firing angle (e.g., 50°) to generate a frequency waveform as shown in Figure 7C. For example, when the firing angle of the commercial AC voltage waveform is 50°, the frequency waveform as shown in Figure 7C can be generated by repeatedly performing the first and second steps.

Herein, with the commercial AC voltage set as 220V and the frequency (f) of the commercial AC voltage set as 60Hz, when the frequency and voltage phase converter 203 of the speed controlling apparatus is operated according to the third frequency switching pattern, an experimentation reveals that a voltage applied to the HIM 100 was measured as 119V and a speed of the HIM was measured as 492RPM.

Meanwhile, when the voltage generated according to the third frequency switching pattern is applied to the fan motor 100, a phase of the voltage at the both ends of the triacs Triac1 and Triac4 can be delayed due to a back electromotive force, and thus an arm short and a driving error can be possibly generated. Thus, it is preferred to apply the voltage generated according to the fourth frequency switching pattern to the fan motor 100.

As shown in Figure 7D, as for the fourth frequency switching pattern, when a frequency command for converting the frequency (f) of the commercial AC voltage into a voltage of f/2 (e.g., 30Hz) is inputted by the user, a first step of turning on the first and fourth switching devices Triac1 and Triac3 during a half (1/2) period, a second step of turning off the first and the fourth switching devices Triac1 and Triac3 during the next half (1/2) period, a third step of inverting the voltage by turning on the second and third switching devices Triac2 and Triac4 during the next half (1/2) period, and a fourth step of turning off the second and third switching devices Triac2 and Triac4 during the next half (1/2) period are performed, and then, the first to fourth steps are repeatedly performed according to a pre-set fourth firing angle (e.g., 40°) to generate a frequency waveform as shown in Figure 7D. For example, when the firing angle of the commercial AC voltage waveform is 40°, the frequency waveform as shown in Figure 7D can be generated by repeatedly performing the first to fourth steps.

Namely, using of the fourth frequency switching pattern prevents generation of the arm short and driving error. In this respect, preferably, the predetermined fourth firing angle is set to be smaller than the predetermined third firing angle in order to prevent the arm short and the driving error.

Herein, with the commercial AC voltage set as 220V and the frequency (f) of the commercial AC voltage set as 60Hz, when the frequency and voltage phase converter 203 of the speed controlling apparatus is operated according to the fourth frequency switching pattern, an experimentation reveals that a voltage applied to the HIM 100 was measured as 111V and a speed of the HIM was measured as 497RPM.

As shown in Figure 7E, as for the fifth frequency switching pattern, when a frequency command for converting the frequency (f) of the commercial AC voltage into a voltage of f/3 (e.g., 20Hz) is inputted by the user, a first step of turning on the first and fourth switching devices Triac1 and Triac3 during a half (1/2) period, a second step of inverting the voltage by turning on the second and third switching devices Triac2 and Triac4 during the next half (1/2) period, a third step of turning on the first and the fourth switching devices Triac1 and Triac3 during the next half (1/2) period, a fourth step of inverting the voltage by turning on the second and third switching devices Triac2 and Triac4 during the next half (1/2) period, and a fifth step of turning on the first and fourth switching devices Triac1 and Triac3 during the next half (1/2) period are performed, and then, the first to fifth steps are repeatedly performed according to a pre-set fifth firing angle (e.g., 70°) to generate a frequency waveform as shown in Figure 7E. For example, when the firing angle of the commercial AC voltage waveform is 70°, the frequency waveform as shown in Figure 7E can be generated by repeatedly performing the first to fifth steps.

Herein, with the commercial AC voltage set as 220V and the frequency (f) of the commercial AC voltage set as 60Hz, when the frequency and voltage phase converter 203 of the speed controlling apparatus is operated according to the fifth frequency switching pattern, an experimentation reveals that a voltage applied to the HIM 100 was measured as 91V and a speed of the HIM was measured as 355RPM.

Meanwhile, when the voltage generated according to the fifth frequency switching pattern is applied to the fan motor 100, a phase of the voltage at the both ends of the triacs Triac1 and Triac4 can be delayed due to a back electromotive force, and thus an arm short and a driving error can be possibly generated. Thus, it is preferred to apply the voltage generated according to the sixth frequency switching pattern to the fan motor 100.

As shown in Figure 7F, as for the sixth frequency switching pattern, when a frequency command for converting the frequency (f) of the commercial AC voltage into a voltage of f/3 (e.g., 20Hz) is inputted by the user, a first step of turning on the first and fourth switching devices Triac1 and Triac3 during a half (1/2) period, a second step of inverting the voltage by turning on the second and third switching devices Triac2 and Triac4 during the next half (1/2) period, a third step of turning off the second and third switching devices Triac2 and Triac4 during the next half (1/2) period, a fourth step of turning on the first and the fourth switching devices Triac1 and Triac3 during the next half (1/2) period, a fifth step of inverting the voltage by turning on the second and third switching devices Triac2 and Triac4 during the next half (1/2) period, and a sixth step of turning off the second and third switching devices Triac2 and Triac4 during the next half (1/2) period are performed, and then, the first to sixth steps are repeatedly performed according to a pre-set sixth firing angle (e.g., 60°) greater than the predetermined fifth firing angle to generate a frequency waveform as shown in Figure 7F. For example, when the firing angle of the commercial AC voltage waveform is 60°, the frequency waveform as shown in Figure 7F can be generated by repeatedly performing the first to sixth steps.

Namely, using of the sixth frequency switching pattern prevents generation of the arm short and driving error. In this respect, preferably, the predetermined sixth firing angle is set to be smaller than the predetermined fifth firing angle in order to prevent the arm short and the driving error.

Herein, with the commercial AC voltage set as 220V and the frequency (f) of the commercial AC voltage set as 60Hz, when the frequency and voltage phase converter 203 of the speed controlling apparatus is operated according to the sixth frequency switching pattern, an experimentation reveals that a voltage applied to the HIM 100 was measured as 84V and a speed of the HIM was measured as 357RPM.

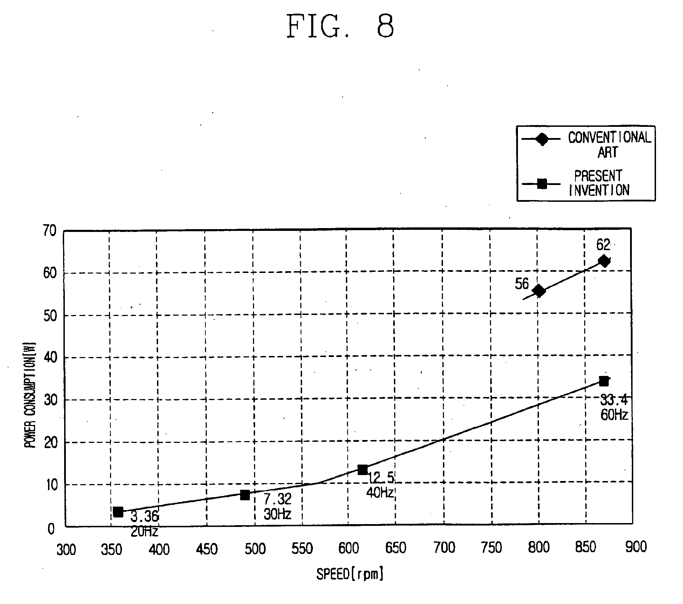

Figure 8 is a graph showing power consumption and the number of times of rotation of a HIM when the apparatus for controlling a speed of a fan motor of an air-conditioner is applied for the HIM compared with a conventional art in accordance with the present invention.

As shown in Figure 8, the apparatus for controlling the speed of the fan motor of the air-conditioner in accordance with the present invention can extend a speed control range of the fan motor of the air-conditioner and reduce power consumption by simultaneously varying the phase and the frequency of the commercial AC voltage according to a command of the user by using the four triacs.

For example, when the apparatus for controlling the speed of the fan motor of the air-conditioner is applied for the HIM 100, the speed control ranges of the fan motor of the air-conditioner are 355, 357, 492, 497, 613 and 855RPM (the speed control range of the HIM in the present invention is 355-855 RPM), so that the speed control range can be applied for an air-conditioner which requires a speed control range of above 100 RPM. In addition, by applying the apparatus for controlling the speed of the fan motor of the air-conditioner to the HIM, power consumption of the fan motor of the air-conditioner can be reduced.

As so far described, the apparatus for controlling the speed of the fan motor of the air-conditioner in accordance with the present invention has such an advantage that the speed control range of the HIM can be extended and power consumption of the HIM can be reduced by simultaneously varying the phase and the frequency of the commercial AC voltage according to a frequency command of a user by using the four triacs.

As the present invention may be embodied in several forms without departing from the spirit or essential characteristics thereof, it should also be understood that the above-described embodiments are not limited by any of the details of the foregoing description, unless otherwise specified, but rather should be construed broadly within the scope as defined in the appended claims, and therefore all changes and modifications that fall within the metes and bounds of the claims, or equivalence of such metes and bounds are therefore intended to be embraced by the appended claims.

## Claims

1. An apparatus for controlling a speed of a fan motor (100) of an air-conditioner which comprises an HIM (Hybrid Induction Motor) (100) having a stator, an induction rotor and a permanent magnet rotor installed between the stator and the induction rotor, comprising:
a frequency and voltage phase converter (203) for simultaneously varying a voltage phase and a frequency of a commercial AC power according to a control signal and applying a voltage varied according to the varied frequency and voltage phase to the HIM (100) of the air-conditioner;
a zero voltage detector (201) for receiving the commercial AC power and detecting a zero voltage of a voltage wave of the commercial AC power; and
a microcomputer (202) electrically connected with the zero voltage detector (201) and the frequency and voltage phase converter (203), generating the control signal providing a predetermined frequency switching pattern according to a frequency command based on a point when the zero voltage is generated, and outputting the control signal to the frequency and voltage phase converter (203), **characterized in that**
the frequency and voltage phase converter (203) comprises:
a first switching device (203A);
a second switching device (203C) connected in series with the first switching device (203A);
a third switching device (203B);
and a fourth switching device (203D) connected in series with the third switching device (203B);
the series connected first and second switching devices (203A, 203C) connected in parallel with the series connected third and fourth switching devices (203B, 203D).
wherein the fan motor (100) is electrically connected with a first junction between the first and second switching devices (203A, 203C) and with a second junction between the third and fourth switching devices (203B, 203C), and
wherein when the frequency of the output voltage is increased, the microcomputer (202) reduces the firing angle of the output voltage waveform inverse-proportionally, and when the frequency of the output voltage waveform is reduced, the microcomputer (202) increases the firing angle of the output voltage waveform inverse-proportionally.

2. The apparatus of claim 1, wherein the microcomputer (202) comprises a memory for storing frequency switching patterns that have been predetermined according to the frequency command.

3. The apparatus of claim 1, wherein the microcomputer (202) increases a firing angle of the output voltage when the frequency of the output voltage is lowered.

4. The apparatus of claim 1, wherein the first to fourth switching devices (203A - 203D) are triacs, respectively.

5. The apparatus of claim 1, wherein the first to fourth switching devices (203A - 203D) are inverters, respectively.

6. The apparatus of claim 1, wherein when a frequency command for maintaining the frequency of the commercial AC power is inputted by a user, the frequency switch pattern turns on only the first and fourth switching devices (203A, 203 D) according to a pre-set firing angle during an entire period of a voltage waveform of the commercial AC.

7. The apparatus of claim 1, wherein, as for the frequency switch pattern, when a frequency command for converting the frequency (f) of the commercial AC voltage into a voltage of f*2/3 is inputted by the user, a first step of turning on the first and fourth switching devices (203A, 203D) during one period, a second step of turning off the first and the fourth switching devices (203A, 203D) during the next half period, and a third step of inverting the voltage by turning on the second and third switching devices (203C, 203B) during the next one period are performed, wherein the first to third steps are performed according to a pre-set firing angle, and the pre-set firing angle is increased when the frequency of the output voltage is reduced.

8. The apparatus of claim 1, wherein as for the frequency switching pattern, when a frequency command for converting the frequency (f) of the commercial AC voltage into a voltage of f/2 is inputted by the user, a first step of turning on the first and fourth switching devices (203A, 203D) during one period and a second step of inverting the voltage by turning on the second and third switching devices (203C, 203B) during the next one period are performed, wherein the first and second steps are performed according to a pre-set firing angle and the pre-set firing angle is increased when the frequency of the output voltage is reduced.

9. The apparatus of claim 1, wherein as for the frequency switching pattern, when a frequency command for converting the frequency (f) of the commercial AC voltage into a voltage of f/2 is inputted by the user, a first step of turning on the first and fourth switching devices (203A, 203D) during a half period, a second step of turning off the first and the fourth switching devices (203A, 203D) during the next half period, a third step of inverting the voltage by turning on the second and third switching devices (203C, 203B) during the next half period, and a fourth step of turning off the second and third switching devices (203C, 203B) during the next half period are performed,
wherein the first to fourth steps are performed according to a pre-set firing angle and the pre-set firing angle is increased when the frequency of the output voltage is reduced.

10. The apparatus of claim 1, wherein as for the frequency switching pattern, when a frequency command for converting the frequency (f) of the commercial AC voltage into a voltage of f/3 is inputted by the user, a first step of turning on the first and fourth switching devices (203A, 203D) during a half period, a second step of inverting the voltage by turning on the second and third switching devices (203C, 203B) during the next half period, a third step of turning on the first and the fourth switching devices (203A, 203D) during the next half period, a fourth step of inverting the voltage by turning on the second and third switching devices (203C, 203B) during the next half period, and a fifth step of turning on the first and fourth switching devices (203A, 203D) during the next half period are performed, wherein the first to fifth steps are performed according to a pre-set firing angle, and the pre-set firing angle is increased when the frequency of the output voltage is reduced.

11. The apparatus of claim 1, wherein, as for the frequency switching pattern, when a frequency command for converting the frequency (f) of the commercial AC voltage into a voltage of f/3 is inputted by the user, a first step of turning on the first and fourth switching devices (203A, 203D) during a half period, a second step of inverting the voltage by turning on the second and third switching devices (203C, 203B) during the next half period, a third step of turning off the second and third switching devices (203C, 203B) during the next half period, a fourth step of turning on the first and the fourth switching devices (203A, 203D) during the next half (1/2) period, a fifth step of inverting the voltage by turning on the second and third switching devices (203C, 203B) during the next half period, and a sixth step of turning off the second and third switching devices (203C, 203B) during the next half period are performed, wherein the first to sixth steps are performed according to a pre-set firing angle, and the pre-set firing angle is increased when the frequency of the output voltage is reduced.

## Patentansprüche

1. Vorrichtung zur Steuerung der Drehzahl eines Lüftermotors (100) einer Klimaanlage, welcher einen HIM (Hybrid Induction Motor, Hybridinduktionsmotor) (100) mit einem Stator, einem Induktionsrotor und einem zwischen dem Stator und dem Induktionsrotor eingebauten Permanentmagnetrotor umfasst, umfassend:
einen Frequenz- und Spannungsphasen-Wandler (203) zum gleichzeitigen Variieren einer Spannungsphase und einer Frequenz eines netzüblichen Wechselstroms entsprechend einem Steuersignal und Anlegen einer entsprechend der variierten Frequenz und Spannungsphase variierten Spannung an den HIM (100) der Klimaanlage;
einen Nullspannungsdetektor (201) zum Aufnehmen des netzüblichen Wechselstroms und Detektieren einer Nullspannung einer Spannungswelle des netzüblichen Wechselstroms; und
einen Mikrocomputer (202), der mit dem Nullspannungsdetektor (201) und dem Frequenz- und Spannungsphasen-Wandler (203) elektrisch verbunden ist, das Steuersignal erzeugt, das ein vorbestimmtes Frequenzumschaltmuster entsprechend einem Frequenzbefehl auf der Basis eines Punktes, wenn die Nullspannung erzeugt wird, gewährleistet und das Steuersignal an den Frequenz- und Spannungsphasen-Wandler (203) ausgibt, **dadurch gekennzeichnet, dass** der Frequenz- und Spannungsphasen-Wandler (203) umfasst:
ein erstes Schaltgerät (203A);
ein zweites Schaltgerät (203C), das mit dem ersten Schaltgerät (203A) in Reihe geschaltet ist;
ein drittes Schaltgerät (203B);
und ein viertes Schaltgerät (203D), das mit dem dritten Schaltgerät (203B) in Reihe geschaltet ist;
wobei die Reihenschaltung aus erstem und zweiten Schaltgerät (203A, 203C) zu der Reihenschaltung aus drittem und viertem Schaltgerät (203B, 203D) parallelgeschaltet ist,
wobei der Lüftermotor (100) mit einem ersten Knotenpunkt zwischen dem ersten und dem zweiten Schaltgerät (203A, 203C) und mit einem zweiten Knotenpunkt zwischen dem dritten und dem vierten Schaltgerät (203B, 203D) elektrisch verbunden ist, und
wobei, wenn die Frequenz der Ausgangsspannung erhöht wird, der Mikrocomputer (202) den Zündwinkel (firing angle) der Ausgangsspannungs-Wellenform umgekehrt proportional verringert, und wenn die Frequenz der Ausgangsspannung verringert wird, der Mikrocomputer (202) den Zündwinkel der Ausgangsspannungs-Wellenform umgekehrt proportional erhöht.

2. Vorrichtung nach Anspruch 1, wobei der Mikrocomputer (202) einen Speicher zum Speichern von Frequenzumschaltmustern, welche entsprechend dem Frequenzbefehl vorbestimmt worden sind, umfasst.

3. Vorrichtung nach Anspruch 1, wobei der Mikrocomputer (202) einen Zündwinkel der Ausgangsspannung erhöht, wenn die Frequenz der Ausgangsspannung verringert wird.

4. Vorrichtung nach Anspruch 1, wobei das erste bis vierte Schaltgerät (203A - 203D) jeweils Triacs sind.

5. Vorrichtung nach Anspruch 1, wobei das erste bis vierte Schaltgerät (203A - 203D) jeweils Wechselrichter sind.

6. Vorrichtung nach Anspruch 1, wobei, wenn ein Frequenzbefehl für das Beibehalten der Frequenz des netzüblichen Wechselstroms von einem Benutzer eingegeben wird, das Frequenzumschaltmuster nur das erste und das vierte Schaltgerät (203A, 203D) entsprechend einem voreingestellten Zündwinkel während einer vollständigen Periode einer Spannungswellenform des netzüblichen Wechselstroms einschaltet.

7. Vorrichtung nach Anspruch 1, wobei, was das Frequenzumschaltmuster anbelangt, wenn durch den Benutzer ein Frequenzbefehl für das Umwandeln der Frequenz (f) der netzüblichen Wechselspannung in eine Spannung von f*2/3 eingegeben wird, ein erster Schritt des Einschaltens des ersten und des vierten Schaltgerätes (203A, 203D) während einer vollen Periode, ein zweiter Schritt des Ausschaltens des ersten und des vierten Schaltgerätes (203A, 203D) während der nächsten Halbperiode und ein dritter Schritt des Invertierens der Spannung durch Einschalten des zweiten und des dritten Schaltgerätes (203C, 203B) während der nächsten vollen Periode ausgeführt werden, wobei der erste bis dritte Schritt entsprechend einem voreingestellten Zündwinkel ausgeführt werden und der voreingestellte Zündwinkel vergrößert wird, wenn die Frequenz der Ausgangsspannung verringert wird.

8. Vorrichtung nach Anspruch 1, wobei, was das Frequenzumschaltmuster anbelangt, wenn durch den Benutzer ein Frequenzbefehl für das Umwandeln der Frequenz (f) der netzüblichen Wechselspannung in eine Spannung von f/2 eingegeben wird, ein erster Schritt des Einschaltens des ersten und des vierten Schaltgerätes (203A, 203D) während einer vollen Periode und ein zweiter Schritt des Invertierens der Spannung durch Einschalten des zweiten und des dritten Schaltgerätes (203C, 203B) während der nächsten vollen Periode ausgeführt werden, wobei der erste und der zweite Schritt entsprechend einem voreingestellten Zündwinkel ausgeführt werden und der voreingestellte Zündwinkel vergrößert wird, wenn die Frequenz der Ausgangsspannung verringert wird.

9. Vorrichtung nach Anspruch 1, wobei, was das Frequenzumschaltmuster anbelangt, wenn durch den Benutzer ein Frequenzbefehl für das Umwandeln der Frequenz (f) der netzüblichen Wechselspannung in eine Spannung von f/2 eingegeben wird, ein erster Schritt des Einschaltens des ersten und des vierten Schaltgerätes (203A, 203D) während einer Halbperiode, ein zweiter Schritt des Ausschaltens des ersten und des vierten Schaltgerätes (203A, 203D) während der nächsten Halbperiode, ein dritter Schritt des Invertierens der Spannung durch Einschalten des zweiten und des dritten Schaltgerätes (203C, 203B) während der nächsten Halbperiode und ein vierter Schritt des Ausschaltens des zweiten und des dritten Schaltgerätes (203C, 203B) während der nächsten Halbperiode ausgeführt werden,
wobei der erste bis vierte Schritt entsprechend einem voreingestellten Zündwinkel ausgeführt werden und der voreingestellte Zündwinkel vergrößert wird, wenn die Frequenz der Ausgangsspannung verringert wird.

10. Vorrichtung nach Anspruch 1, wobei, was das Frequenzumschaltmuster anbelangt, wenn durch den Benutzer ein Frequenzbefehl für das Umwandeln der Frequenz (f) der netzüblichen Wechselspannung in eine Spannung von f/3 eingegeben wird, ein erster Schritt des Einschaltens des ersten und des vierten Schaltgerätes (203A, 203D) während einer Halbperiode, ein zweiter Schritt des Invertierens der Spannung durch Einschalten des zweiten und des dritten Schaltgerätes (203C, 203B) während der nächsten Halbperiode, ein dritter Schritt des Einschaltens des ersten und des vierten Schaltgerätes (203A, 203D) während der nächsten Halbperiode, ein vierter Schritt des Invertierens der Spannung durch Einschalten des zweiten und des dritten Schaltgerätes (203C, 203B) während der nächsten Halbperiode und ein fünfter Schritt des Einschaltens des ersten und des vierten Schaltgerätes (203A, 203D) während der nächsten Halbperiode ausgeführt werden, wobei der erste bis fünfte Schritt entsprechend einem voreingestellten Zündwinkel ausgeführt werden und der voreingestellte Zündwinkel vergrößert wird, wenn die Frequenz der Ausgangsspannung verringert wird.

11. Vorrichtung nach Anspruch 1, wobei, was das Frequenzumschaltmuster anbelangt, wenn durch den Benutzer ein Frequenzbefehl für das Umwandeln der Frequenz (f) der netzüblichen Wechselspannung in eine Spannung von f/3 eingegeben wird, ein erster Schritt des Einschaltens des ersten und des vierten Schaltgerätes (203A, 203D) während einer Halbperiode, ein zweiter Schritt des invertierens der Spannung durch Einschalten des zweiten und des dritten Schaltgerätes (203C, 203B) während der nächsten Halbperiode, ein dritter Schritt des Ausschaltens des zweiten und des dritten Schaltgerätes (203C, 203B) während der nächsten Halbperiode, ein vierter Schritt des Einschaltens des ersten und des vierten Schaltgerätes (203A, 203D) während der nächsten Halbperiode, ein fünfter Schritt des Invertierens der Spannung durch Einschalten des zweiten und des dritten Schaltgerätes (203C, 203B) während der nächsten Halbperiode und ein sechster Schritt des Ausschaltens des zweiten und des dritten Schaltgerätes (203C, 203B) während der nächsten Halbperiode ausgeführt werden, wobei der erste bis sechste Schritt entsprechend einem voreingestellten Zündwinkel ausgeführt werden und der voreingestellte Zündwinkel vergrößert wird, wenn die Frequenz der Ausgangsspannung verringert wird.

## Revendications

1. Appareil pour contrôler une vitesse d'un moteur de ventilateur (100) d'un climatiseur qui comprend un HIM (Hybrid Induction Motor ou moteur à induction hybride) (100) ayant un stator, un rotor à induction et un rotor à aimant permanent installé entre le stator et le rotor à induction, comprenant :
un convertisseur de fréquence et de phase de tension (203) pour faire varier simultanément une phase de tension et une fréquence d'une puissance CA du commerce en fonction d'un signal de commande et appliquer une tension qui varie en fonction de la variation de la fréquence et de la phase de tension au moteur à induction hybride (100) du climatiseur ;
un détecteur de tension nulle (201) pour recevoir la puissance CA du commerce et détecter une tension nulle d'une onde de tension de la puissance CA du commerce ; et
un micro-ordinateur (202), connecté électriquement au détecteur de tension nulle (201) et au convertisseur de fréquence et de phase de tension (203), générant le signal de commande fournissant un motif de commutation de fréquence prédéterminé en fonction d'une instruction de fréquence sur la base d'un point où la tension nulle est générée, et faisant sortir le signal de commande à l'attention du convertisseur de fréquence et de phase de tension (203), **caractérisé en ce que**
le convertisseur de fréquence et de phase de tension (203) comprend :
un premier dispositif de commutation (203A) ;
un deuxième dispositif de commutation (203C) connecté en série au premier dispositif de commutation (203A) ;
un troisième dispositif de commutation (203B) ;
et un quatrième dispositif de commutation (203D) connecté en série au troisième dispositif de commutation (203B) ;
les premier et deuxième dispositifs de commutation (203A, 203C) connectés en série étant connectés en parallèle aux troisième et quatrième dispositifs de commutation (203B, 203D) connectés en série,
dans lequel le moteur de ventilateur (100) est connecté électriquement avec une première jonction entre les premier et le deuxième dispositifs de commutation (203A, 203C) et avec une deuxième jonction entre les troisième et quatrième dispositifs de commutation (203B, 203D), et
dans lequel, lorsque la fréquence de la tension de sortie augmente, le micro-ordinateur (202) réduit un angle d'amorçage de la forme d'onde de tension de sortie de manière inversement proportionnelle, et lorsque la fréquence de la forme d'onde de tension diminue, le micro-ordinateur (202) augmentant l'angle d'amorçage de la forme d'onde de tension de sortie de manière inversement proportionnelle.

2. Appareil selon la revendication 1, dans lequel le micro-ordinateur (202) comprend une mémoire pour stocker des motifs de commutation de fréquence qui ont été prédéterminés en fonction de l'instruction de fréquence.

3. Appareil selon la revendication 1, dans lequel le micro-ordinateur (202) augmente un angle d'amorçage de la tension de sortie lorsque la fréquence de la tension de sortie est abaissée.

4. Appareil selon la revendication 1, dans lequel les premier à quatrième dispositifs de commutation (203A-203D) sont respectivement des triacs.

5. Appareil selon la revendication 1, dans lequel les premier à quatrième dispositifs de commutation (203A-203D) sont respectivement des inverseurs.

6. Appareil selon la revendication 1, dans lequel, lorsqu'une instruction de fréquence pour maintenir la fréquence de la puissance CA du commerce est introduite par un utilisateur, le motif de commutation de fréquence allume seulement les premier et quatrième dispositifs de commutation (203A, 203D) en fonction d'un angle d'amorçage préréglé pendant une période complète d'une forme d'onde de tension du CA du commerce.

7. Appareil selon la revendication 1, dans lequel, en ce qui concerne le motif de commutation de fréquence, lorsqu'une instruction de fréquence pour convertir la fréquence (f) de la tension CA du commerce en une tension de f*2/3 est entrée par l'utilisateur, on effectue une première étape consistant à allumer les premier et quatrième dispositifs de commutation (203A, 203D) pendant une période, une deuxième étape consistant à éteindre les premier et quatrième dispositifs de commutation (203A, 203D) pendant la demi-période suivante, et une troisième étape consistant à inverser la tension en allumant les deuxième et troisième dispositifs de commutation (203C, 203B) pendant la période suivante, dans lequel les première à troisième étapes sont effectuées en fonction d'un angle d'amorçage préréglé, et l'angle d'amorçage préréglé augmentant lorsque la fréquence de la tension de sortie diminue.

8. Appareil selon la revendication 1, dans lequel, en ce qui concerne le motif de commutation de fréquence, lorsqu'une instruction de fréquence pour convertir la fréquence (f) de la tension CA du commerce en une tension de f/2 est entrée par l'utilisateur, on effectue une première étape consistant à allumer les premier et quatrième dispositifs de commutation (203A, 203D) pendant une période et une deuxième étape consistant à inverser la tension en allumant les deuxième et troisième dispositifs de commutation (203C, 203B) pendant la période suivante, dans lequel les première et deuxième étapes sont effectuées en fonction d'un angle d'amorçage préréglé, et l'angle d'amorçage préréglé augmentant lorsque la fréquence de la tension de sortie diminue.

9. Appareil selon la revendication 1, dans lequel, en ce qui concerne le motif de commutation de fréquence, lorsqu'une instruction de fréquence pour convertir la fréquence (f) de la tension CA du commerce en une tension de f/2 est introduite par l'utilisateur, on effectue une première étape consistant à allumer les premier et quatrième dispositifs de commutation (203A, 203D) pendant une demi-période, une deuxième étape consistant à éteindre les premier et quatrième dispositifs de commutation (203A, 203D) pendant la demi-période suivante, une troisième étape consistant à inverser la tension en allumant les deuxième et troisième dispositifs de commutation (203C, 203B) pendant la demi-période suivante, et une quatrième étape consistant à éteindre les deuxième et troisième dispositifs de commutation (203C, 203B) pendant la demi-période suivante,
dans lequel les première à quatrième étapes sont effectuées en fonction d'un angle d'amorçage préréglé et l'angle d'amorçage préréglé augmentant lorsque la fréquence de la tension de sortie diminue.

10. Appareil selon la revendication 1, dans lequel, en ce qui concerne le motif de modulation de fréquence, lorsqu'une instruction de fréquence pour convertir la fréquence (f) de la tension CA du commerce en une tension de f/3 est introduite par l'utilisateur, on effectue une première étape consistant à allumer les premier et quatrième dispositifs de commutation (203A, 203D) pendant une demi-période, une deuxième étape consistant à inverser la tension en allumant les deuxième et troisième dispositifs de commutation (203C, 203B) pendant la demi-période suivante, une troisième étape consistant à allumer les premier et quatrième dispositifs de commutation (203A, 203D) pendant la demi-période suivante, une quatrième étape consistant à inverser la tension en allumant les deuxième et troisième dispositifs de commutation (203C, 203B) pendant la demi-période suivante, et une cinquième étape consistant à allumer les premier et quatrième dispositifs de commutation (203A, 203D) pendant la demi-période suivante, dans lequel les première à cinquième étape sont effectuées en fonction d'un angle d'amorçage préréglé, et l'angle d'amorçage préréglé augmentant lorsque la fréquence de la tension de sortie diminue.

11. Appareil selon la revendication 1, dans lequel, en ce qui concerne le motif de modulation de fréquence, lorsqu'une instruction de fréquence pour convertir la fréquence (f) de la tension CA du commerce en une tension de f/3 est introduite par l'utilisateur, on effectue une première étape consistant à allumer les premier et quatrième dispositifs de commutation (203A, 203D) pendant une demi-période, une deuxième étape consistant à inverser la tension en allumant les deuxième et troisième dispositifs de commutation (203C, 203B) pendant la demi-période suivante, une troisième étape consistant à éteindre les deuxième et troisième dispositifs de commutation (203C, 203B) pendant la demi-période suivante, une quatrième étape consistant à allumer les premier et quatrième dispositifs de commutation (203A, 203D) pendant la demi-période suivante (1/2), une cinquième étape consistant à inverser la tension en allumant les deuxième et troisième dispositifs de commutation (203C, 203B) pendant la demi-période suivante, et une sixième étape consistant à éteindre les deuxième et troisième dispositifs de commutation (203C, 203B) pendant la demi-période suivante, dans lequel les première à sixième étapes sont effectuées en fonction d'un angle d'amorçage préréglé, et l'angle d'amorçage préréglé augmentant lorsque la fréquence de la tension de sortie diminue.
